# EUROPÄISCHE PATENTSCHRIFT

(11) **EP 1 592 575 B1**
(45) Veröffentlichungstag und Bekanntmachung des Hinweises auf die Patenterteilung: **13.08.2008**
(21) Anmeldenummer: 04707217.8
(22) Anmeldetag: 02.02.2004
(51) Int. Cl.: B60K 37/06, H01H 13/70

(54) **INNENAUSSTATTUNGSTEIL FÜR EIN FAHRZEUG UND VERFAHREN ZU SEIN ER HERSTELLUNG**
INTERIOR FITTING FOR A VEHICLE AND METHOD FOR THE PRODUCTION THEREOF
ELEMENT D'EQUIPEMENT INTERIEUR POUR VEHICULE ET PROCEDE DE PRODUCTION CORRESPONDANT

(30) Priorität: 04.02.2003 DE 10304512; 05.09.2003 DE 10341471
(43) Veröffentlichungstag der Anmeldung: 09.11.2005
(73) Patentinhaber: Johnson Controls GmbH, 51399 Burscheid (DE)
(72) Erfinder: RAKERS, Michael, 50968 Köln (DE); STOSCHEK, Olaf, 96317 Kronach (DE); KARACSONYI, Tamas, 42289 Wuppertal (DE); CZINKI, Alexander, Aschaffenburg (DE); GÜNTHER, Benjamin, 42719 Solingen (DE); CARSTEN, Holger, 47441 Moers (DE); KURT, Hasan, 50769 Köln (DE); GALL, Hugues, 78630 Orgeval (FR); SCHMAUL, Michael, 50931 Köln (DE); BELLENBERG, Christoph, 50735 Köln (DE); VAN DEN BEUKEL, Arie, 50735 Köln (DE); HELMICH, Philipp, 51467 Bergisch Gladbach (DE); SCHULZ, Joachim, 42929 Wermelskirchen (DE); VISSERS, Johannes, NL-4872 SX Etten-Leur (NL)
(74) Vertreter: Brosch, Oliver
(86) Internationale Anmeldenummer: PCT/EP2004/000911
(87) Internationale Veröffentlichungsnummer: WO 2004/069578

(56) Entgegenhaltungen:
- EP-A- 1 249 369
- WO-A-01/94156
- DE-A- 10 120 866
- DE-C- 10 010 088
- DE-U- 9 310 721
- US-A- 5 448 028
- US-A- 5 952 630
- US-A1- 2002 101 738
- US-A1- 2002 104 746

## Beschreibung

Die Erfindung betrifft ein Innenausstattungsteil für ein Fahrzeug, insbesondere für ein Kraftfahrzeug, umfassend einen Trägerkörper, der zumindest bereichsweise mit einem sensorfunktionalen Flächengebilde und einer innenraumseitigen Deckschicht versehen ist, wobei mittels des Flächengebildes in Abhängigkeit vom Einwirkort unterschiedliche Ausgangssignale erzeugbar sind. Die Erfindung betrifft ferner ein Verfahren zur Bedienung eines Fahrzeugs unter Verwendung derartiger Innenausstattungsteile und Verfahren zu deren Herstellung.

Aus der Patentschrift US 5,864,105 ist ein gattungsgemäßes Ausstattungsteil in Form eines Sitzes für ein Kraftfahrzeug bekannt. Der Sitz ist mit einer Bedieneinrichtung für eine Sitzverstellung versehen, die ein auf einer Seitenfläche angeordnetes Touch-pad, ein berührungsempfindliches, zweidimensional auflösendes Sensorfeld aufweist. Das Touch-pad ist bereichsweise mit einer Deckschicht aus einem harten Kunststoff versehen, in welchem Ausnehmungen in Gestalt der Projektion des Sitzes angeordnet sind. Durch diese Ausnehmungen hindurch wird das Touch-pad unmittelbar vom Finger des Bediener berührt und in Abhängigkeit von der Einwirkzone eine Verstellung des Sitzes herbeigeführt. Die Kontur der Ausnehmung dient dabei sowohl der optischen als auch der taktilen Orientierung des Bedieners.

Diese Bedieneinrichtung weist den Nachteil auf, dass das Touch-pad unmittelbar einer erheblichen mechanischen Beanspruchung sowie Umgebungseinflüssen ausgesetzt ist.

Ferner wird in der Patentschrift US 5,952,630 eine Armlehne für eine Türverkleidung beschrieben, in der eine Mehrzahl von Bedienelementen, als kraftempfindliche Sensoren innerhalb oder unterhalb der äußeren Dekorschicht der Armlehne angeordnet, Anwendung findet. Dabei übernimmt jeder Sensor die Funktion eines konventionellen mechanischen Schalters oder Tasters unter Beibehaltung der weichen haptischen Anmutung der Oberfläche der Dekorschicht.
Von Nachteil ist dabei die Notwendigkeit zum Einsatz von jeweils mindestens einem eigenen Sensoreelement für jede zu steuernde Funktion, was aufwendige Verdrahtung nach sich zieht und wegen des Flächenbedarfs zu Platzierungsproblemen führt.

Darüber hinaus wird in der Offenlegungsschrift DE 101 33 896 A1 ein eine Airbagabdeckung überdeckendes Display beschrieben, das unter anderem der Darstellung von Navigationsinformationen dienen kann, wobei ggf. die Anzeige des Displays durch Bedienung vermittels Berührung änderbar ist, in einer Ausführungform als 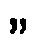 Touch Screen". Die Realisierung als bildgebende Folie ermöglicht dabei eine Anpassung an die von der Airbagabdeckung vorgegebene Kontur.
Da hierbei das Hauptaugenmerk auf der Qualität der Bilddarstellung liegt, kann keine verschleißresistente Deckschicht eingesetzt werden. Ein weiterer Nachteil besteht darin, dass diese Lösung sehr kostenintensiv ist.
Patentschrift DE 10010088Cl offenbart ein Innenausstattungsteil gemäß Oberbegriff des Anspruchs 1.
Der Erfindung liegt die Aufgabe zugrunde, ein Innenausstattungsteil für ein Fahrzeug mit variabel gestaltbaren und gegebenenfalls intuitiv handhabbaren Bedieneinrichtungen anzubieten. Ferner soll eine Anordnung der Bedieneinrichtungen an bislang hierzu nicht genutzten Oberflächen der Innenausstattungsteile möglich sein.

Die Aufgabe wird erfindungsgemäß durch ein Innenausstattungsteil gemäß Anspruch 1 gelöst. Zunächst kann damit eine Erneuerung der Deckschicht bei Abnutzung oder Verschmutzung durchgeführt werden. Weiterhin ist es so möglich, eine Rekonfiguration des Bedienelementes vorzunehmen, indem etwa die bedeutungszuweisenden Pictogramme oder Symbole durch einen Austausch abgeändert werden. Somit können Beeinträchtigungen durch Umwelteinflüsse, Verschmutzung oder Verschleiß von dem sensorfunktionalen Flächengebilde ferngehalten werden, bei gleichzeitiger Verbesserung des ästhetischen Erscheinungsbildes. Diese Verbesserung kann in der Einheitlichkeit des Erscheinungsbildes bestehen. Dazu ist es vorteilhaft, zur Ausbildung der Deckschicht dieselben Materialien zu verwenden, die ohnehin für die Oberflächenherstellung von Innenausstattungsteilen - beispielsweise Dachhimmel, Armaturenträger oder Türverkleidungen - Anwendung finden, etwa Textilien, Leder oder Kunstleder oder Folien.

Vorteilhaft ist eine Ausführung des sensorfunktionalen Flächengebildes als druckempfindliche Sensoreinheit, weil dadurch die dem Benutzer geläufige Methode zur Bedienung, wie sie auch bei konventionellen Schaltern oder Tastern Anwendung findet, beibehalten werden kann. Gleichzeitig wird bei der dem Bedienvorgang innewohnenden Berührung dem Bediener die haptische, oftmals weiche Anmutung des Innenausstattungsteils vermittelt. Um diesen Effekt zu betonen, kann eine kompressible Zwischenlage, entweder zwischen Deckschicht und sensorfunktionalem Flächengebilde oder zwischen sensorfunktionalem Flächengebilde und dem Trägerkörper, eingefügt sein, wobei es besonders im ersten Fall eine weitere bevorzugte Variante gibt, gemäß der diese Lage zusätzlich punktuell Formstücke erhöhter Steifigkeit beinhaltet. Dadurch bleibt die Nachgiebigkeit der Oberfläche des Innenausstattungsteils im Fall von großflächiger Druckbeanspruchung weitgehend erhalten, während eine kleinflächige Krafteinleitung über die Deckschicht primär über die Formstücke weitergeführt wird. Damit werden besonders die unmittelbar darunter liegenden Zonen des sensorfunktionalen Flächengebildes druckbeansprucht; es liegt also eine Konzentrationsfunktion vor.

Vorteilhaft ist auch die Anordnung einer Zwischenlage mit gummielastischem Charakter, beispielsweise aus Silikonmaterial, nach Art einer Tastaturmatte. Neben der Konzentration der Krafteinleitung auf die Bereiche des sensorfunktionalen Flächengebildes unmittelbar unterhalb der Tastenbereiche der Tastaturmatte kann damit zusätzlich unter Ausnutzung der gängigen nichtlinearen Auslegung von Rückstellkraft des Tastenelementes bezogen auf den Betätigungsweg eine haptische Rückmeldung über die Betätigung an den Bediener erzielt werden.

Auf einfache Weise kann die Bedeutungsdarstellung, die einem Bedienfeld zukommt, unter Zuhilfenahme optischer Mittel erfolgen, etwa farbliches Absetzen eines Bedienfeldes von seiner Umgebung oder Ausstattung mit Symbolen oder Pictogrammen.

Eine vorteilhafte Ausführungsform der Erfindung ergibt sich weiterhin durch Intergration einer Beleuchtungseinrichtung in das Innenausstattungsteil, wodurch eine Kennzeichnung funktionaler Zonen eines Bedienfeldes unterstützt oder herbeigeführt werden kann.

Als Beleuchtungseinrichtung kann bevorzugt eine flachbauende Variante Einsatz finden, um Einschränkungen bei der Konstruktion des Innenausstattungsteils zu vermeiden, etwa eine Elektrolumineszenzfolie, eine OLED oder PolyLED. Dabei ergibt sich die bevorzugte Lage dieses Bauteils aus den gestalterischen Rahmenbedingungen. Bei hinreichendem Transmissionsgrad des sensorfunktionalen Flächengebildes und der Deckschicht, etwa bei einer Ausführung in textilem Material, ist eine Anordnung der Lichtquelle unterhalb dieser Schichten möglich, besonders unmittelbar unterhalb des sensorfunktionalen Flächengebildes.

Eine weitere vorteilhafte Variante der optischen Orientierungsunterstützung besteht in der Einarbeitung von lichtleitenden Fasern in eine ihrem Aufbau nach dafür geeignete Schicht, etwa eine textile Deckschicht. Damit können die darzustellenden Bereiche besonders konturscharf abgegrenzt werden.

Ein anderes Hilfsmittel zur optischen Orientierung kann in der Projektion von Lichtmustern auf die zu kennzeichnenden Bereiche der innenraumseitigen Oberfläche angegeben werden, mit dem Vorteil der verbesserten Erkennbarkeit der Bedeutung auch aus ungünstigen Betrachtungswinkeln.

Insbesondere für einen Fahrzeugführer kann es vorteilhaft sein, ihm eine Orientierung bei dem Bedienvorgang zu ermöglichen, die keinen Sichtkontakt zum Bedienelement erfordert. Für diesen Fall können taktile Mittel zur Anwendung kommen.
Eine bevorzugte Variante ist dabei die Verwendung eines strukturierten Formteils, welches mit Ausnehmungen versehen sein kann, um so einen Teilbereich der Bedienfläche abzugrenzen und so mit einer gesonderten Bedeutung zu versehen.
So ist etwa eine oval geformte Ringstruktur ausführbar, deren Durchmesser in der Grössenordnung einer menschlichen Hand liegt, wobei der Innenbereich eine Zone ohne festliegende Funktionszuordnung definiert und einer Parametereingabe vermittels Streichbewegung dient. Diese Streichbewegung ist über ihre Eigenschaft als fortlaufende Aneinanderreihung unterschiedlicher Krafteinwirkorte auf dem sensorfunktionalen Flächengebilde detektierbar, woraus Informationen über die Richtung und/oder die Geschwindigkeit der Streichbewegung ableitbar sind. Die Ausführung verfügt weiterhin über in die Ringstruktur eingelassene Formelemente, die, flexibel gelagert, bei Bedienung die beaufschlagte Kraft in Richtung des sensorfunktionalen Flächengebildes weiterleiten, entsprechend der Betätigung des Tastenelementes einer Tastaturmatte.
Mit einer solchen erfindungsgemäßen Vorrichtung können kombinierte Bedienhandlungen ausgeführt werden, bei denen etwa zunächst eine Auswahl der zu bedienenden Funktion durch Tastendruck erfolgt und danach die Parametrierung der Funktion, etwa eine Verstellrichtung oder ein Verfahrweg, durch Streichbewegung näher bestimmt wird.

Eine weitere Möglichkeit zur Verdeutlichung oder Kennzeichnung von Bedienbereichen mit besonderen Vorzügen hinsichtlich der ästhetischen Ausprägung besteht, unter Ausnutzung der Elastizität einer Deckschicht, darin, der taktilen Orientierung dienende Strukturen nicht während der Herstellungsphase dauerhaft zu erzeugen, sondern durch unterhalb der Deckschicht angeordnete, beispielsweise elektrodynamisch formvariable oder steuerbar bewegliche, Strukturkörper zu bilden.

Speziell für die Bedienung thermischer Funktionen kann es vorteilhaft sein, die taktile Orientierung in ebensolcher Weise zur Verfügung zu stellen, etwa durch die Verwendung von Heizdrähten oder Peltier-Elementen.

Erfindungsgemäß wird ferner ein Innenausstattungsteil für ein Fahrzeug geschaffen, das vorzugsweise ein Bedienfeld aufweist, wobei das Bedienfeld einen zentralen Bereich und eine Mehrzahl von peripheren Bereichen aufweist. Hierdurch ist eine einfache und intuitive Bedienung von verschiedenen Komponenten des Fahrzeugs über ein einziges Bedienfeld möglich.

Bevorzugt ist der zentrale Bereich des Bedienfeldes rund. Dies hat zum einen den Vorteil, dass eine optisch ansprechende Gestaltung des Bedienfeldes möglich ist, und andererseits, dass weiterhin die Bedienung erleichtert wird. Der Fachmann weiß, dass es selbstverständlich auch möglich ist, den zentralen Bereich des Bedienfeldes anders zu gestalten, beispielsweise eckig, quadratisch, rechteckig oder auch oval.

Bevorzugt ist erfindungsgemäß weiterhin eine Ausführungsform, bei der die peripheren Bereiche des Bedienfeldes sektorenartig um den zentralen Bereich herum angeordnet sind. Insbesondere wird hierdurch eine intuitive Bedienungsführung ermöglicht, die auch eine einfache Zuordnung der auf dem Bedienfeld ausgeführten Bedienoperationen zu deren Auswirkungen bzw. Folgen, insbesondere an unterschiedlichen Fahrzeugkomponenten, ermöglicht.

Bevorzugt ist weiterhin, dass die peripheren Bereiche des Bedienfeldes den zentralen Bereich des Bedienfeldes vollständig umschliessen. Hierdurch ist eine in noch verstärktem Maße ästhetisch wirkende Gestaltung des Bedienfeldes möglich. Außerdem bietet eine solche Ausgestaltung des Bedienfeldes die Möglichkeit, eine Vielzahl von Fahrzeugkomponenten zu bedienen und trotzdem die Ausdehnung des Bedienfeldes vergleichsweise gering zu halten.

Bevorzugt ist ferner, dass dem Innenausstattungsteil eine Anzeigevorrichtung zugeordnet ist , wobei auf der Anzeigevorrichtung Informationen in Abhängigkeit eines Betriebsmodus anzeigbar sind. Durch die Kombination des erfindungsgemäßen Innenausstattungsteils mit einer Anzeigevorrichtung ist es möglich, das Innenausstattungsteil quasi universell zur Steuerung von Fahrzeugkomponenten zu benutzen. Dies ermöglicht eine extrem erhöhte Variabilität in den Bedienungsmöglichkeiten und führt weiterhin dazu, dass eine Vielzahl von mechanischen Komponenten insbesondere Schaltern und dergleichen im Fahrzeug eingespart werden können, was zur Folge hat, dass die Kosten des Fahrzeugs erheblich reduziert bzw. eine entsprechende Komforterhöhung bei gleichen Kosten erzielt werden kann.

Vorzugsweise ist ferner vorgesehen, dass in Abhängigkeit des Betriebsmodus unterschiedliche Fahrzeugkomponenten mittels des Bedienfeldes bedienbar sind. Dies ermöglicht es, die Bedienung der Fahrzeugkomponenten einfach zu gestalten und eine intuitive Bedienung der Fahrzeugkomponenten zu ermöglichen, weil jedem Betriebsmodus eindeutig eine Komponente zugeordnet ist, so dass Bedienfehler weitgehend ausgeschlossen werden können.

Bevorzugt ist ferner, dass der Betriebsmodus in Abhängigkeit der Betätigung des zentralen Bereichs und/oder der peripheren Bereiche des Bedienfeldes, vorzugsweise in Abhängigkeit der Betätigung der peripheren Bereiche des Bedienfeldes, änderbar ist. Hierdurch ist es erfindungsgemäß möglich, eine eindeutige Zuordnung des Betriebsmodus, das heißt vorzugsweise der zu bedienenden Fahrzeugkomponente zur Betätigung von Teilen des Bedienfeldes zuzuordnen. Besonders intuitiv und einfach ist die Bedienerführung des Bedienfeldes dann, wenn (allein) die peripheren Bereiche des Bedienfeldes zur Definition des Betriebsmodus herangezogen werden.

Bevorzugt ist ferner, dass einem unterschiedlichen Betriebsmodus die Bedienung einer unterschiedlichen Fahrzeugkomponente zugeordnet ist, insbesondere die Klimaregelung, die Belüftung, ein Autoradio, ein Navigationsgerät, ein Autotelefon, ein Audiokonfigurationssystem, ein Kraftstoffinformationssystem und/oder ein Mobilitätsinformationssystem. Hierdurch ist es in vorteilhafter Weise möglich, genau eine Fahrzeugkomponente bzw. eine üblicherweise gemeinsam bedienbare Gruppe von Fahrzeugkomponenten genau einem Betriebsmodus zuzuordnen, was die Bedienung des Bedienfeldes weiter vereinfacht und auch für weniger geübte Benutzer zugänglich macht. Ein Mobilitätsinformationssystem ist hierbei als eine Mehrzahl für die Mobilität des Fahrzeugs notwendiger Teilsysteme zu verstehen, beispielsweise die Batteriekapazität bzw. das Funktionieren der Stromversorgung im Fahrzeug, beispielsweise der Öldruck und/oder die Öltemperatur oder auch der Reifenluftdruck bzw. der Reifenzustand.

Bevorzugt ist ferner, dass bei einem eingestellten Betriebsmodus die Bedienung der dem eingestellten Betriebsmodus zugeordneten Fahrzeugkomponente in Abhängigkeit der Betätigung des zentralen Bereichs und/oder der peripheren Bereiche des Bedienfeldes, vorzugsweise in Abhängigkeit der Betätigung des zentralen Bereichs des Bedienfeldes, erfolgt. Hierdurch ist es erfindungsgemäß möglich, dass die Bedienung der zugeordneten Fahrzeugkomponenten in einfacher und intuitiver Weise erfolgt. Insbesondere wenn eine Bedienung einer durch den eingestellten Betriebsmodus fest definierten Fahrzeugmoduskomponente ausschließlich durch die Betätigung des zentralen Bereiches des Bedienfeldes durchgeführt wird, ergibt sich eine klare und leicht verständliche Strukturierung der Bedienung der Fahrzeugkomponenten dahingehend, dass es immer der zentrale Bereich des Bedienfeldes ist, welcher zur Bedienung der eingestellten Fahrzeugkomponente herangezogen wird.

Weiterhin ist es bevorzugt, dass durch die Betätigung des zentralen Bereichs eine auf der Anzeigevorrichtung anzeigbare Listenauswahl von Funktionen und/oder anzeigbaren Informationen vornehmbar ist. Dadurch ist es beispielsweise, für den Fall der Steuerung des Kraftstoffinformationssystems möglich, durch Listenauswahl eine der verschiedenen Funktionen auszuführen. Beispielsweise betrifft eine der auf der Anzeigevorrichtung als Liste angezeigten Funktionen der noch voraussichtlich mit dem Tankinhalt zurücklegbaren Strecke oder dem durchschnittlichen Kraftstoffverbrauch oder dem momentanen Kraftstoffverbrauch oder ähnlichen Informationen. Solche Funktionen bzw. Informationen können durch Betätigung des zentralen Bereichs des Bedienfeldes ausgeführt bzw. angezeigt werden, beispielsweise durch einen Doppelklick.

Vorzugsweise ist es weiterhin vorgesehen, dass durch die Betätigung des zentralen Bereichs ein auf der Anzeigevorrichtung anzeigbarer Kartenausschnitt durch eine Richtungsbetätigung verschiebbar und durch eine Drehbewegung größenänderbar (zoombar) ist, wobei der Kartenausschnitt, insbesondere der einzige auf der Anzeigevorrichtung angezeigte Kartenausschnitt ist. Hierdurch ist es möglich, in besonders einfacher, intuitiver und schneller Weise an den gewünschten Kartenausschnitt zu gelangen, welcher für einen Benutzer auf der Anzeigevorrichtung angezeigt werden soll. Der angezeigte Kartenausschnitt, welcher verschoben werden kann, ist bevorzugt der einzige angezeigte Kartenausschnitt, so dass keine Teile der Anzeigevorrichtung durch die Anzeige von weiteren für einen Benutzer nicht interessanten Kartenausschnitten "verschwendet" werden.

Bevorzugt ist weiterhin vorgesehen, dass durch die Betätigung des zentralen Bereichs eine auf der Anzeigevorrichtung anzeigbare Konfiguration des Audiokonfigurationssystems änderbar ist. Hierdurch ist es möglich, in einfacher Weise die Audiokonfiguration des Fahrzeugs einzustellen bzw. zu ändern, wobei durch die Koppelung des Bedienfeldes mit der Anzeigevorrichtung eine einfache und intuitive und vor allem schnelle Änderung bzw. Einstellung der Konfiguration möglich ist.

Die Figuren stellen beispielhaft und schematisch verschiedene Ausführungsbeispiele der Erfindung dar.
- **Figur 1**: zeigt einen Längsschnitt durch eine erste Ausführungsform des erfindungsgemäßen Innenausstattungsteils.
- **Figur 2**: zeigt einen Längsschnitt durch eine zweite Ausführungsform des erfindungsgemäßen Innenausstattungsteils.
- **Figur 3**: zeigt einen Längsschnitt durch eine dritte Ausführungsform des erfindungsgemäßen Innenausstattungsteils.
- **Figur 4**: zeigt einen Längsschnitt durch eine vierte Ausführungsform des erfindungsgemäßen Innenausstattungsteils.
- **Figuren 5a und 5b**: zeigen eine perspektivische Darstellung bzw. einen Längsschnitt durch eine fünfte Ausführungsform des erfindungsgemäßen Innenausstattungsteils.
- **Figur 6**: zeigt den Innenraum eines Kraftfahrzeugs mit erfindungsgemäßen Innenausstattungsteilen.
- **Figuren 7 bis 13**: zeigen einen Ausschnitt des erfindungsgemäßen Innenausstattungsteils mit verschiedenen Darstellungen einer Anzeigevorrichtung

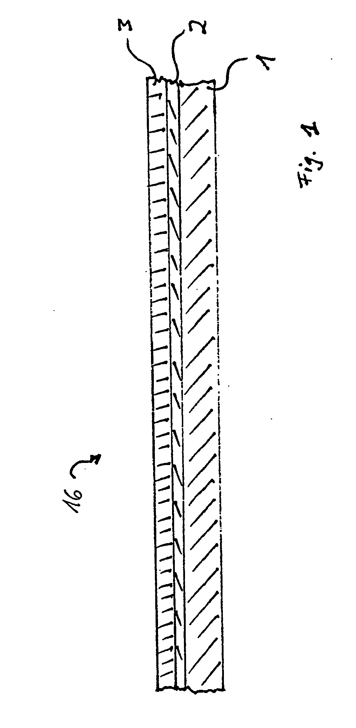

In **Figur 1** ist ein Längsschnitt durch eine erste Ausführungsform eines Innenausstattungsteils 16 mit einem Trägerkörper 1 und einem sensorfunktionalen Flächengebilde 2 dargestellt, wobei dieses mit dem Trägerkörper durch Verkleben verbunden ist, und eine mit dem sensorfunktionalen Flächengebilde ebenfalls durch Kleben verbundene Deckschicht 3.

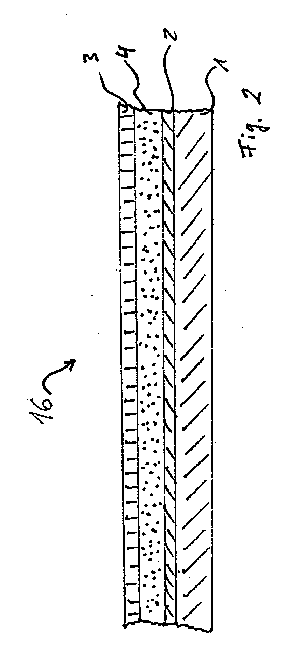

**Figur 2** zeigt einen Längsschnitt durch eine zweite Ausführungsform eines erfindungsgemäßen Ausstattungsteils 16, bei dem zusätzlich eine kompressible Zwischenlage 4 unterhalb der Deckschicht 3 und oberhalb des sensorfunktionalen Flächenelementes 2 angeordnet ist.

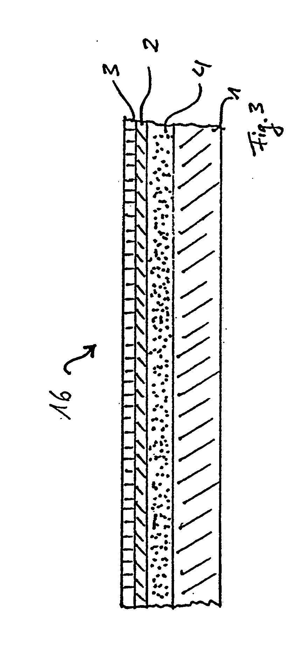

**Figur 3** zeigt einen Längsschnitt durch eine dritte Ausführungsform eines erfindungsgemäßen Ausstattungsteils 16, bei dem die kompressible Zwischenlage 4 unterhalb des sensorfunktionalen Flächenelementes 2 und oberhalb des Trägerkörpers 1 angeordnet ist.

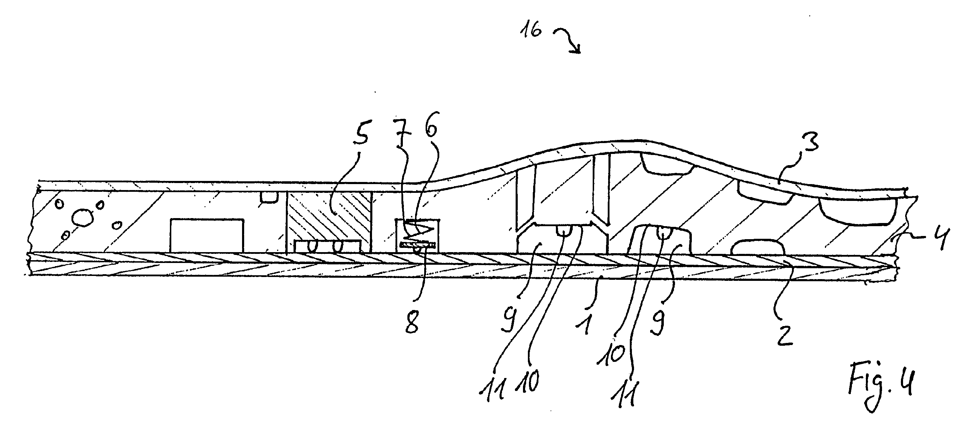

**Figur 4** zeigt einen Längsschnitt durch eine vierte Ausführungsform des erfindungsgemäßen Ausstattungsteils 16 mit einem Trägerkörper 1, dem darüber angeordneten sensorfunktionalen Flächengebilde 2 sowie einer rauminnenseitig angeordneten Deckschicht 3, wobei zwischen der Deckschicht 3 und dem sensorfunktionalen Flächengebilde 2 ebenfalls eine kompressible Zwischenlage 4 angeordnet ist. Da diese die auf die Deckschicht punktuell ausgeübte Kraft gegebenenfalls in unerwünschter Weise flächig auf das sensorfunktionale Flächengebilde 2 verteilt, ist in die kompressible Zwischenlage ein örtlich kraftübertragendes Formstück 5 auf einem halbsteifen Werkstoff, beispielsweise aus Silikon, eingelassen. Eine ähnliche Wirkung übt die Einlage 6 aus, die aus einer Feder 7 in Verbindung mit einer Druckplatte 8 besteht. Einem "Verschleifen" des auf die Deckschicht ausgeübten Drucks wirken ferner dem sensorfunktionalen Flächengebilde 2 zugewandte Ausnehmungen 9 in der kompressiblen Zwischenlage 4 entgegen, wobei die bei Verformung mit dem sensorfunktionalen Flächengebilde 2 in Kontakt bringbare Oberfläche 10 der kompressiblen Zwischenlage 4 mit Vorsprüngen 11 versehen sind.

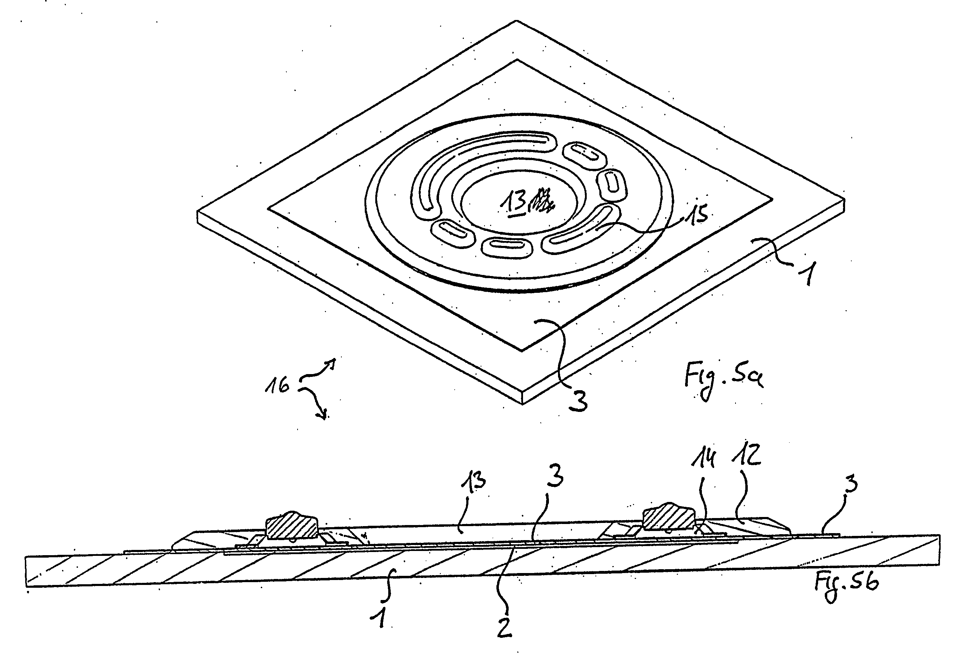

Bei einer in **Figur 5** dargestellten Ausführungsform des erfindungsgemäßen Ausstattungsteils 16 ist auf der das sensorfunktionale Flächengebilde 2 überdeckenden Deckschicht 3 ein dreidimensionales Formteil 12 angeordnet, das einerseits im Bereich einer Ausnehmung 13 den unmittelbaren Zugriff auf die Deckschicht 3 ermöglicht und andererseits eine Vielzahl von Aussparungen 14 aufweist, in welchen auf die Deckschicht 3 wirkende Tasten 15 angeordnet sind, welche vom Fahrzeuginsassen betätigbar sind. Die Aussparungen 14 mit den Tasten 15 sind dabei zentrisch um die kreisförmige Ausnehmung 13 herum angeordnet.

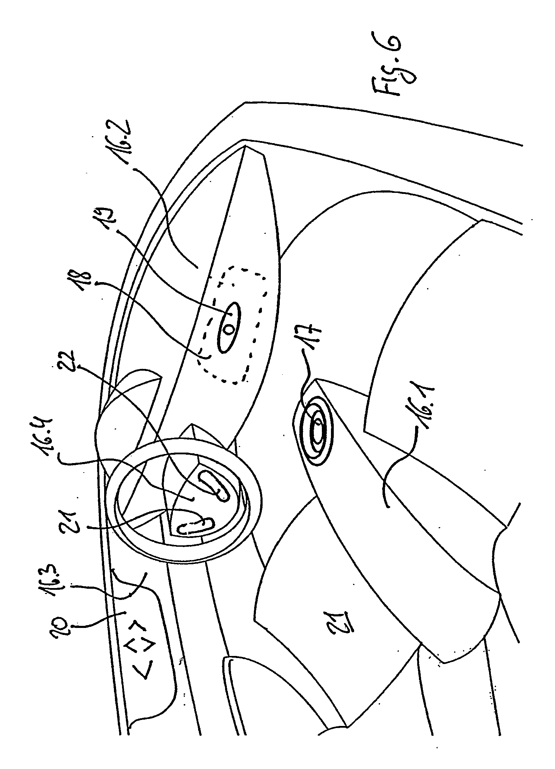

**Figur 6** zeigt den Innenraum eines Kraftfahrzeugs mit erfindungsgemäß ausgestalteten Innenausstattungsteilen 16, wobei 16.1 eine Mittelkonsole, 16.2 ein Cockpit, 16.3 eine Türverkleidung und 16.4 die Prallfläche eines Lenkrads darstellen.

Auf der Mittelkonsole 16.1 ist ein der fünften Ausführungsform (nach Figur 5) ähnelndes Ausstattungsteil 16 mit einem Bedienfeld 17 angeordnet, über das beispielsweise ein Navigationssystem steuerbar ist. Auf der innenraumseitigen Oberfläche des Cockpits 16.2 kann oberhalb des anderweitig kaum nutzbaren Airbagdeckels 18 ein Bedienfeld 19 angebracht werden, mittels dessen die Innenraumbeleuchtung für den Beifahrer oder dessen individuelle Klimaregelung einstellbar ist. Auf der Türverkleidung 16.3 befindet sich ein Bedienfeld 20 zur elektromotorischen Längs- oder Höhenverstellung des Fahrersitzes 21. In der Prallfläche 16.4 sind ferner ein Bedienfeld 21 zur Einstellung des Tempomaten und ein Bedienfeld 22 zur Betätigung des Fahrtrichtungsanzeigers angeordnet.

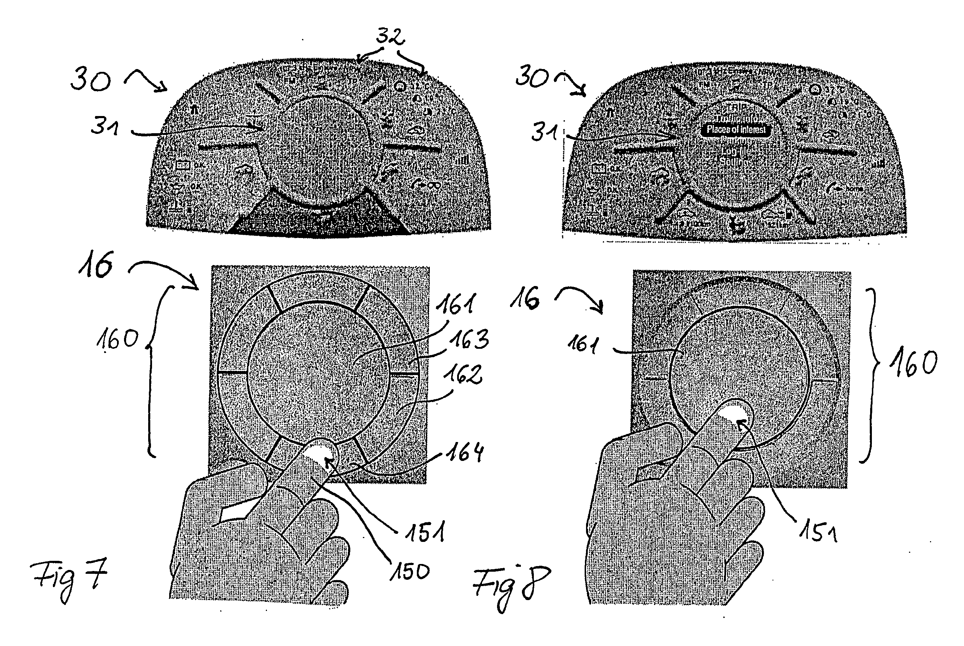

In Figur 7 ist ein Ausschnitt des erfindungsgemäßen Innenausstattungsteils 16 mit einem Bedienfeld 160 dargestellt. Das Bedienfeld 160 weist einen zentralen Bereich 161 und eine Mehrzahl von peripheren Bereichen auf, wobei in Figur 7 lediglich ein erster peripherer Bereich 162, ein zweiter peripherer Bereich 163 und ein dritter peripherer Bereich 164 bezeichnet sind. Weiterhin ist in Figur 7 ein Bedieninstrument 150 eines nicht dargestellten Benutzers dargestellt, wobei das Bedieninstrument 150 insbesondere die Hand bzw. ein Finger des Benutzers sein kann. Das Bedieninstrument 150, das beispielsweise auch als Stift ausgebildet sein kann, berührt das Bedienfeld 160 an einem mit dem Bezugszeichen 151 und einem Pfeil gekennzeichneten Einwirkort. Im oberen Teil der Figur 7 ist weiterhin eine Anzeigevorrichtung 30 dargestellt, die, in Bereiche aufgeteilt, eine vergleichbare Anordnung für die Bereiche des Bedienfeldes 160 aufweist. Wiederum ist auf der Anzeigeeinheit 30 bzw. auf der Anzeigevorrichtung 30 ein zentraler Anzeigebereich von einer Mehrzahl von peripheren Anzeigebereichen 32 getrennt. Bei den peripheren Anzeigebereichen 32 sind Bilder bzw. Piktogramme auf der Anzeigevorrichtung 30 dargestellt, die die Betriebskomponente bzw. Fahrzeugkomponente andeuten, welche durch eine Betätigung des dem Anzeigebereich 31, 32 entsprechenden (d. h. entsprechend angeordneten) Bereich 161, 162, 163, 164 des Bedienfeldes 160 entspricht. Im oberen Teil der Figur 7 sind auf der Anzeigevorrichtung 30 beispielsweise von oben beginnend und im Uhrzeigersinn fortfahrend Einstellfunktionen für ein Autoradio, Einstellfunktionen für eine Klimaregelung bzw. eine Belüftung des Fahrzeugs, Einstellfunktionen für die Bedienung eines Autotelefons, Einstellfunktionen für die Bedienung eines Kraftstoffinformationssystems, Einstellfunktionen für die Bedienung eines Mobilitätsinformationssystems und Einstellfunktionen für die Bedienung eines Navigationssystems angeordnet bzw. angezeigt. Beispielsweise ist der erste periphere Bereich 162 des Bedienfeldes 160 der Bedienung des Autotelefons zugeordnet und es ist der zweite periphere Bereich 163 des Bedienfeldes 160 der Klimaregelung bzw. der Belüftung des Fahrzeuges zugeordnet. Der dritte periphere Bereich 164 des Bedienfeldes 160 ist der Bedienung bzw. der Anzeige von Informationen des Kraftstoffinformationssystems zugeordnet. Durch eine Bedienung dieses dritten peripheren Bereichs des Bedienfeldes 160 erscheint, wie in Figur 8 dargestellt, auf der Anzeigevorrichtung 30 im zentralen Anzeigebereich 31 eine Liste von ausführbaren Funktionen, die einer Steuerung bzw. einer Bedienung des Kraftstoffinformationssystems dienen. Beispielsweise wird im zentralen Anzeigebereich 31 eine Liste mit verschiedenen Einträgen, beispielsweise zur durchfahrenen Strecke und zu weiteren Informationen angezeigt. Ansonsten entsprechen sich die Darstellungen der Figur 7 und der Figur 8 vollständig, wobei im Unterschied zur Figur 7 in der Figur 8 durch die Betätigung des zentralen Bereichs 161 des Bedienfeldes 160, d. h. durch einen Einwirkort 151 auf dem zentralen Bereich 161 des Bedienfeldes 160 eine Auswahl der auf der Anzeigevorrichtung 30 angezeigten unterschiedlichen Informationen des Kraftstoffinformationssystems möglich ist.

Beim Bedienfeld 160 des Innenausstattungsteils 16 ist es vorgesehen, dass sich die Bereiche 161 bis 164 für einen Benutzer wahrnehmbar dadurch unterschieden bzw. unterscheidbar sind, dass die Sichtseite, d. h. die Oberfläche des Bedienfeldes 160 entsprechend der unterschiedlichen Bereiche 161 bis 164 strukturiert ist. Die Strukturierung der Oberfläche ist erfindungsgemäß insbesondere für einen Benutzer taktil wahrnehmbar. Es ist klar, dass die Bedienung des zentralen Bereichs 161 des Bedienfeldes 160 unterschiedlich ist, je nach gewählter Funktionengruppe durch einen der peripheren Bereiche 162 bis 164 des Bedienfeldes. Hierbei definieren die Vorwahl- bzw. Auswahl einer bestimmten zu bedienenden Fahrzeugkomponente den Betrieb des Bedienfeldes 160 in einem bestimmten dieser Komponente bzw. diesem Bereich des Bedienfeldes 160 zugeordneten Betriebsmodus. Daher hängt die Funktionalität des zentralen Bereichs 161 von der Vorwahl der zu bedienenden Fahrzeugkomponente bzw. des Betriebsmodus durch einen der peripheren Bereiche 162 bis 164 des Bedienteils 160 ab, wobei die Funktionalität des zentralen Bereiches 161 darüber hinaus vorzugsweise frei programmierbar ist. Hierbei ist es möglich, dass bei der Programmierung verschiedene Bewegungen beispielsweise eines Fingers 151 eines Benutzers auf dem Bedienfeld 160 erkannt werden können, wie beispielsweise Streichen, Berühren durch eine Fingerspitze, kreisend drehend, stärker oder schwächer drücken, Doppelklicken und andere mehr. Die freie Programmierbarkeit ist selbstverständlich auch noch nach dem Kauf des Fahrzeuges möglich, so dass beispielsweise während der Lebensdauer des Fahrzeuges neue Merkmale der eingebauten Programmierung realisierbar sind. Vorzugsweise ist das Bedienfeld 160 in die Oberfläche des Innenausstattungsteils 16 integriert, so dass Verletzungen, beispielsweise bei Unfallsituationen, weitgehend vermieden werden. Weiterhin kann das Bedienfeld 160 erfindungsgemäß weitgehend in die Oberfläche des Innenausstattungsteils 16 integriert sein, so dass eine optisch ansprechende und nicht überfrachtete bzw. überladene Atmosphäre bzw. Anmutung des Umfelds des Innenausstattungsteils 16 möglich ist.

Diese Bemerkungen gelten für sämtliche im Zusammenhang mit der vorliegenden Erfindung beschriebenen Bedienfelder, insbesondere für alle in den Figuren 7 bis 13 beschriebenen Bedienfelder 160, so dass im folgenden lediglich noch auf die Unterschiede eingegangen wird.

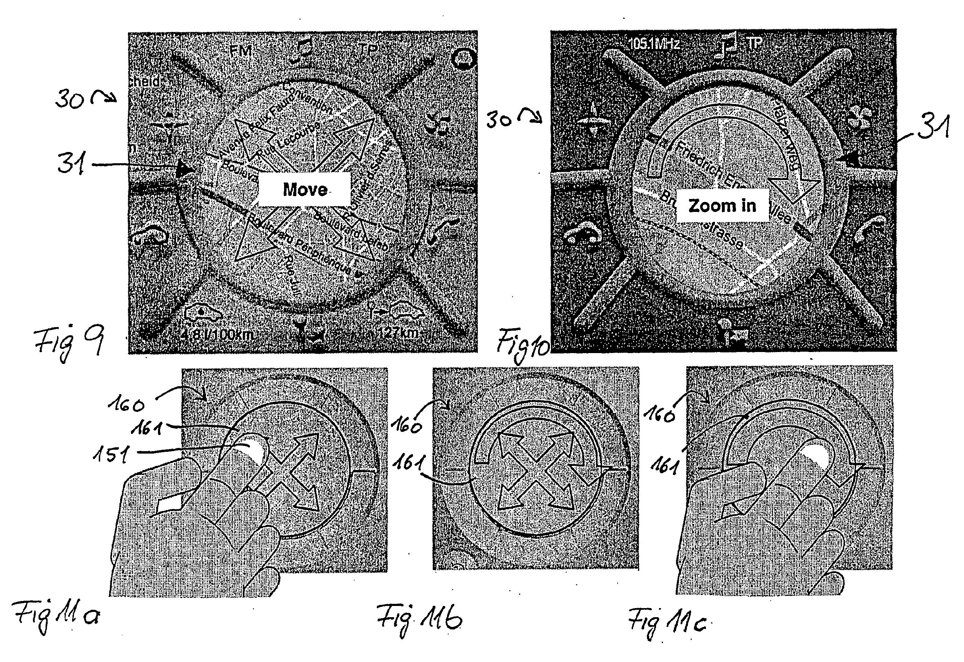

In Figur 9 ist eine Anzeigevorrichtung 30 bzw. ein Ausschnitt einer Anzeigevorrichtung 30 für die Bedienung eines Navigationssystems dargestellt. Im zentralen Anzeigebereich 31 ist ein Ausschnitt einer Karte dargestellt.

In Figur 10 ist ebenfalls eine Anzeigevorrichtung 30 mit einem Kartenausschnitt im zentralen Anzeigebereich 31 dargestellt, wobei der Kartenausschnitt jedoch gegenüber der Darstellung in Figur 9 eine Vergrößerung darstellt, d. h. es werden mehr Details eines allerdings dann kleineren (geographischen) Kartenbereichs dargestellt.

Die Bedienung eines solchermaßen zum Betrieb im Betriebsmodus zur Bedienung eines Navigationssystems eingerichteten Bedienfeldes 160 ist in den Figuren 11a, 11b und 11c dargestellt. Der zentrale Bereich 161 des Bedienfeldes 160 entspricht bzw. repräsentiert den sichtbaren Kartenausschnitt bzw. allgemein die sichtbare Grafik im zentralen Anzeigebereich 31. Durch das Berühren des zentralen Bereichs 161 des Bedienfeldes 160 kann ein Benutzer den sichtbaren Kartenausschnitt dahingehend manipulieren, als er ihn in alle Richtungen verschieben kann und weiterhin auch größenverändern, d. h. "zoomen" kann. Eine Veränderung des Kartenausschnitts sowohl hinsichtlich einer Bewegung als auch hinsichtlich einer Größenveränderung kann direkt und simultan ausgeführt werden. Hierbei entspricht eine Bewegung des Kartenausschnitts einer Bewegung eines Fingers 151 eines Benutzers auf dem zentralen Bereich 161 des Bedienfeldes 160. Durch eine kreisförmige Bewegung auf dem zentralen Bereich 161 des Bedienfeldes erfolgt eine Größenveränderung des dargestellten Kartenausschnittes im zentralen Anzeigenbereich 31. Es ist daher nicht notwendig, zur Durchführung der einen oder der anderen Aufgabe beispielsweise ein Menü zu wechseln oder dergleichen. Die Darstellungsänderung des Kartenausschnittes im zentralen Anzeigenbereich 31 entspricht hierbei dem Einwirkungsort 151 auf dem zentralen Bereich 161 des Bedienfeldes. Das bedeutet, dass falls ein Benutzer rechts von der Mitte den zentralen Bereich 161 berührt, wird der Kartenausschnitt sich nach rechts bewegen. Falls ein Benutzer unten rechts berührt, wird der Kartenausschnitt sich nach unten rechts bewegen. Hierdurch ergibt sich eine direkte Beeinflussbarkeit sowohl des Kartenausschnittes als auch des Vergrößerungsfaktors des Kartenausschnittes. Weiterhin ergibt sich eine Übereinstimmung zwischen Bewegungen auf dem zentralen Bereich 161 des Bedienfeldes 160 und auf dem sichtbaren Teil der Grafik bzw. des Kartenausschnittes. Hierdurch kann eine Auswahl bzw. Anzeige eines gewünschten Kartenausschnittes besonders schnell und besonders einfach vorgenommen werden. Es ist erfindungsgemäß somit nicht notwendig, mehrere Bewegungs- und Vergrößerungsschritte durchzuführen um schließlich zum gewünschten Kartenausschnitt bzw. zur Anzeige des gewünschten Kartenausschnittes zu gelangen, sondern es ist möglich, mit einfachen Bewegungen auf dem zentralen Teil 161 des Bedienfeldes 160 den Kartenausschnitt zu wählen. Hierdurch ergibt sich eine besonders intuitive Bedienerführung, da die Fingerbewegungen auf dem zentralen Bereich 161 des Bedienfeldes direkt mit der Größe bzw. mit der Position des dargestellten Kartenausschnittes übereinstimmen. In Figur 11 a ist durch nicht mittels eines Bezugszeichens bezeichneten Pfeilen auf dem zentralen Bereich 161 des Bedienfeldes 160 eine Richtungsbetätigung des Bedienfeldes 160 dargestellt und es ist in Figur 11c durch einen ebenfalls nicht mittels eines Bezugszeichens bezeichneten Pfeil auf dem zentralen Bereich 161 des Bedienfeldes 160 eine Drehbetätigung des zentralen Bereichs 161 des Bedienfeldes 160 dargestellt. In Figur 11b ist eine Kombination einer Richtungsbetätigung mit einer Drehbetätigung dargestellt.

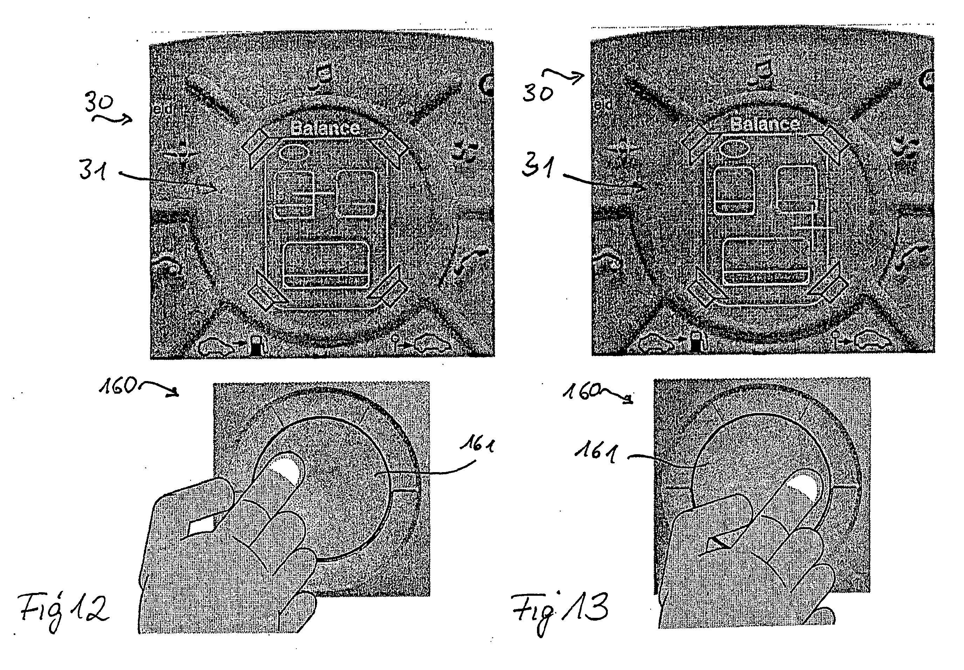

In Figur 12 und 13 ist jeweils im unteren Teil der Figur ein Bedienfeld 160 und im oberen Teil der Figur eine Anzeigevorrichtung 30 dargestellt, wobei sich die Figuren 12 und 13 auf den Betriebsmodus zur Einstellung bzw. zur Bedienung eines Audiokonfigurationssystems beziehen. Für die in den Figuren 12 und 13 dargestellte Situation dient das jeweils nicht bezeichnete Innenausstattungsteil 16 mittels eines drucksensitiven Bedienfeldes 160 dazu, gleichzeitig die Balance und den Überblendregler (Fader) eines Audiokonfigurationssystems des Fahrzeugs einzustellen. Hierbei entspricht ein Ort auf dem zentralen Bereich 161 des Bedienfeldes 160 dem Ort im Fahrzeug bzw. im Innenraum des Fahrzeugs, an dem ein vom Audiosystem des Fahrzeugs erzeugter Ton besonders gut gehört wird. Zur Veränderung bzw. Einstellung des Audiokonfigurationssystems ist es erfindungsgemäß vorgesehen, den zentralen Bereich 161 des Bedienfeldes 160 an einem Ort zu berühren, der dem gewünschten Ort der besonders guten Audioübertragung bzw. Audiofunktionalität im Fahrzeug entspricht, wobei das gesamte Fahrzeug im zentralen Anzeigebereich 31 zumindest schematisch abgebildet ist und wobei durch das Drücken eines der gewünschten Übertragungsstelle entsprechenden Orts des zentralen Bereichs 161 des Bedienfeldes 160 die Audiokonfiguration definiert wird. Das bedeutet, dass beispielsweise ein Benutzer rechts von der Mitte des zentralen Bereichs 161 das Bedienfeld 160 berührt, wodurch sich der Ort der gehörten Audioquelle ebenfalls nach rechts hin im Fahrzeuginnenraum bewegt. Falls ein Benutzer den zentralen Bereich 161 des Bedienfeldes 160 unten rechts berührt, entspricht dies einer Bewegung diagonal nach unten rechts des Ortes der gehörten Audioquelle. Hierdurch ist es erfindungsgemäß vorteilhaft möglich, gleichzeitig sowohl den Überblendregler (Fader) als auch die Balance des fahrzeuginternen Audiosystems einzustellen und somit in besonders komfortabler Weise das Audiokonfigurationssystem zu bedienen. Ein solches Bedienkonzept ist universell einsetzbar, beispielsweise in auch einem Wohnbereich, in einem Bürobereich, in einem LKW-Umfeld oder in jedem anderen Fahrzeug.

Erfindungsgemäß ist es daher möglich, in sehr viel schnellerer und einfacherer Weise eine optimale Konfiguration des Audiosystems des Fahrzeugs (oder sonstigen Raums) herbeizuführen, was in herkömmlicher Weise lediglich durch wiederholte und umständliche einzelne Einstellungen sowohl der Balance als auch des Faders möglich war. Erfindungsgemäß ist es daher möglich, in besonders intuitiver und schneller Weise die optimale Audiokonfiguration des Fahrzeugs herbeizuführen. Es ist auf diese Weise außerdem möglich, dass die akustisch eigentlich unterschiedlichen Funktionen "Fader" und "Balance" von einem Benutzer als einstellbar erkennbar sind und für das Wohlbefinden bei einer akustischen Darbietung im Fahrzeug oder in sonstigen Räumen als wesentlich erkannt werden.

### Bezugszeichenliste

- 1: Trägerkörper
- 2: sensorfunktionales Flächengebilde
- 3: Deckschicht
- 4: kompressible Zwischenlage
- 5: Formstück
- 6: Einlage
- 7: Feder
- 8: Druckplatte
- 9: Ausnehmungen
- 10: Oberfläche
- 11: Vorsprünge
- 12: dreidimensionales Formteil
- 13: Ausnehmung
- 14: Aussparungen
- 15: Tasten
- 16: Innenausstattungsteil
- 16.1: Mittelkonsole
- 16.2: Cockpit
- 16.3: Türverkleidung
- 16.4: Prallfläche eines Lenkrads
- 17, 19, 20, 22: Bedienfeld
- 18: Airbagdeckel
- 21: Fahrersitzes
- 30: Anzeigevorrichtung
- 31: zentraler Anzeigebereich
- 32: peripheren Anzeigebereiche
- 150: Bedieninstrument
- 151: Einwirkort
- 160: Bedienfeld
- 161: zentraler Bereich
- 162: erster peripherer Bereich
- 163: zweiter peripherer Bereich
- 164: dritter peripherer Bereich

## Patentansprüche

1. Innenausstattungsteil (16) für ein Fahrzeug, insbesondere für ein Kraftfahrzeug, umfassend einen Trägerkörper (1), der zumindest bereichsweise mit einem sensorfunktionalen Flächengebilde (2) und einer innenraumseitigen Deckschicht (3) versehen ist, wobei mittels des Flächengebildes (2) in Abhängigkeit vom Einwirkort unterschiedliche Ausgangssignale erzeugbar sind und die Deckschicht (3) flexibel ausgebildet ist und das sensorfunktionale Flächengebilde (2) vollständig überdeckt **dadurch gekennzeichnet, dass** die Deckschicht (3) austauschbar ist.

2. Innenausstattungsteil (16) nach Anspruch 1, **dadurch gekennzeichnet, dass** das Flächengebilde (2) drucksensitiv ausgebildet ist.

3. Innenausstattungsteil (16) nach Anspruch 1 oder 2, **dadurch gekennzeichnet, dass** die Deckschicht (3) als textiles Flächengebilde (2), insbesondere als Gewebe ausgebildet ist.

4. Innenausstattungsteil (16) nach Anspruch 1 oder 2, **dadurch gekennzeichnet, dass** die Deckschicht (3) aus einem Leder oder Kunstleder oder einer Folie besteht.

5. Innenausstattungsteil (16) nach einem der vorhergehenden Ansprüche, **dadurch gekennzeichnet, dass** die Deckschicht (3) unmittelbar auf dem sensorfunktionalen Flächengebilde (2) angeordnet ist.

6. Innenausstattungsteil (16) nach einem der vorhergehenden Ansprüche, **dadurch gekennzeichnet, dass** zwischen der Deckschicht (3) und dem sensorfunktionalen Flächengebilde (2) mindestens eine kompressible Zwischenlage (4), insbesondere aus einem weichen Kunststoffschaum, angeordnet ist.

7. Innenausstattungsteil (16) nach einem der vorhergehenden Ansprüche, **dadurch gekennzeichnet, dass** zwischen dem Trägerkörper (1) und dem sensorfunktionalen Flächengebilde (2) mindestens eine kompressible Zwischenlage (4), insbesondere aus einem weichen Kunststoffschaum, angeordnet ist.

8. Innenausstattungsteil (16) nach Anspruch 6 oder 7, **dadurch gekennzeichnet, dass** in der kompressiblen Zwischenlage (4) kraftübertragende Formstücke (5) aus einem steifen oder halbsteifen Werkstoff angeordnet sind.

9. Innenausstattungsteil (16) nach einem der vorhergehenden Ansprüche, **dadurch gekennzeichnet, dass** das Innenausstattungsteil innenraumseitig Mittel zur optischen Orientierung des Bedieners aufweist.

10. Innenausstattungsteil (16) nach einem der vorhergehenden Ansprüche, insbesondere nach Anspruch 9, **dadurch gekennzeichnet, dass** unterhalb der Deckschicht (3) eine Beleuchtungseinrichtung angeordnet ist.

11. Innenausstattungsteil (16) nach Anspruch 10, **dadurch gekennzeichnet, dass** die Beleuchtungseinrichtung flächig ausgebildet und bevorzugt zwischen dem Trägerkörper (1) und der Deckschicht (3), insbesondere unmittelbar unterhalb des sensorfunktionalen Flächengebildes (2) angeordnet ist.

12. Innenausstattungsteil (16) nach Anspruch 11, **dadurch gekennzeichnet, dass** die Beleuchtungseinrichtung eine Elektroluminiszenzfolie, eine OLED oder PolyLED umfasst.

13. Innenausstattungsteil (16) nach einem der Ansprüche 9 bis 12, **dadurch gekennzeichnet, dass** die Mittel zur optischen Orientierung vom Fahrzeuginnenraum her auf die Deckschicht (3) projizierbare Bilder umfassen.

14. Innenausstattungsteil (16) nach einem der Ansprüche 9 bis 13, **dadurch gekennzeichnet, dass** die Mittel zur optischen Orientierung in die Deckschicht (3) und/oder im sensorfunktionalen Flächengebilde angeordnete Lichtleiter umfasst.

15. Innenausstattungsteil (16) nach einem der vorhergehenden Ansprüche, **dadurch gekennzeichnet, dass** das Innenausstattungsteil Mittel zur taktilen Orientierung des Bedieners aufweist.

16. Innenausstattungsteil (16) nach Anspruch 15, **dadurch gekennzeichnet, dass** die Mittel ein strukturiertes Formteil (12) aus einem steifen oder halbsteifen Werkstoff umfassen.

17. Innenausstattungsteil (16) nach Anspruch 16, **dadurch gekennzeichnet, dass** das strukturierte Formteil (12) Ausnehmungen (13) aufweist.

18. Innenausstattungsteil (16) nach einem der Ansprüche 15 bis 17, **dadurch gekennzeichnet, dass** die Mittel zur taktilen Orientierung veränderbare Strukturen im Innenausstattungsteil aufweisen.

19. Innenausstattungsteil (16) nach einem der Ansprüche 15 bis 18, **dadurch gekennzeichnet, dass** die Mittel zur taktilen Orientierung Orte unterschiedlicher Oberflächentemperaturen umfassen.

20. Innenausstattungsteil (16) für ein Fahrzeug, nach einem der vorhergehenden Ansprüche, **dadurch gekennzeichnet, dass** das Innenausstattungsteil (16) ein Bedienfeld (160) aufweist, wobei das Bedienfeld (160) einen zentralen Bereich (161) und eine Mehrzahl von peripheren Bereichen (162, 163) aufweist.

21. Innenausstattungsteil (16) nach Anspruch 20, **dadurch gekennzeichnet, dass** der zentrale Bereich (161) des Bedienfeldes (160) rund ist.

22. Innenausstattungsteil (16) nach Anspruch 20 oder 21, **dadurch gekennzeichnet, dass** die peripheren Bereiche (162, 163) des Bedienfeldes (160) sektorenartig um den zentralen Bereich (161) herum angeordnet sind.

23. Innenausstattungsteil (16) nach Anspruch 20, 21 oder 22, **dadurch gekennzeichnet, dass** die peripheren Bereiche (162, 163) des Bedienfeldes (160) den zentralen Bereich (161) des Bedienfeldes (160) vollständig umschließen,

24. Innenausstattungsteil (16) nach einem der Ansprüche 20 bis 23, **dadurch gekennzeichnet, dass** dem Innenausstattungsteil (16) eine Anzeigevorrichtung (30) zugeordnet ist, wobei auf der Anzeigevorrichtung (30) Informationen in Abhängigkeit eines Betriebsmodus anzeigbar sind.

25. Innenausstattungsteil (16) nach Anspruch 24, **dadurch gekennzeichnet, dass** in Abhängigkeit des Betriebsmodus unterschiedliche Fahrzeugkomponenten mittels des Bedienfeldes (160) bedienbar sind.

26. Innenausstattungsteil (16) nach einem der Ansprüche 20 bis 25, **dadurch gekennzeichnet, dass** der Betriebsmodus in Abhängigkeit der Betätigung des zentralen Bereichs (161) und/oder der peripheren Bereiche (162, 163) des Bedienfeldes (160), vorzugsweise in Abhängigkeit der Betätigung der peripheren Bereiche (162, 163) des Bedienfeldes (160), änderbar ist.

27. Innenausstattungsteil (16) nach einem der Ansprüche 20 bis 26, **dadurch gekennzeichnet, dass** einem unterschiedlichen Betriebsmodus die Bedienung einer unterschiedlichen Fahrzeugkomponenten zugeordnet ist, insbesondere die Klimaregelung, die Belüftung, ein Autoradio, ein Navigationsgerät, ein Autotelefon, ein Audiokonfigurationssystem, ein Kraftstoffinformationssystem und/oder ein Mobilitätsinformationssystem.

28. Innenausstattungsteil (16) nach einem der Ansprüche 20 bis 27, **dadurch gekennzeichnet, dass** bei einem eingestellten Betriebsmodus, die Bedienung der dem eingestellten Betriebsmodus zugeordnete Fahrzeugkomponente in Abhängigkeit der Betätigung des zentralen Bereichs (161) und/oder der peripheren Bereiche (162,163) des Bedienfeldes (160), vorzugsweise in Abhängigkeit der Betätigung des zentralen Bereichs (161) des Bedienfeldes (160), erfolgt.

29. Innenausstattungsteil (16) nach einem der Ansprüche 20 bis 28, **dadurch gekennzeichnet, dass** durch die Betätigung des zentralen Bereichs (161) eine auf der Anzeigevorrichtung (30) anzeigbare Listenauswahl von ausführbaren Funktionen und/oder anzeigbaren Informationen vornehmbar ist.

30. Innenausstattungsteil (16) nach einem der Ansprüche 20 bis 29, **dadurch gekennzeichnet, dass** durch die Betätigung des zentralen Bereichs (161) ein auf der Anzeigevorrichtung (30) anzeigbarer Kartenausschnitt durch eine Richtungsbetätigung verschiebbar und durch eine Drehbetätigung größenänderbar (zoombar) ist, wobei der Kartenausschnitt insbesondere der einzige auf der Anzeigevorrichtung (30) angezeigte Kartenausschnitt ist.

31. Innenausstattungsteil (16) nach einem der Ansprüche 20 bis 30, **dadurch gekennzeichnet, dass** durch die Betätigung des zentralen Bereichs (161) eine auf der Anzeigevorrichtung (30) anzeigbare Konfiguration des Audiokonfigurationssystems änderbar ist.

32. Verfahren zur Bedienung von Kraftfahrzeugen, unter Verwendung eines Innenausstattungsteils (16) nach einem der vorhergehenden Ansprüche, **dadurch gekennzeichnet, dass** der Richtung (x-Richtung, y-Richtung) und/oder Geschwindigkeit (dx/dt, dy/dt) einer stetigen Verlagerung des Einwirkorts auf dem sensorfunktionalen Flächengebilde (2) eine stetige Verstellung des zu bedienenden Bauteils des Fahrzeug zugeordnet wird.

33. Verfahren nach Anspruch 32, **dadurch gekennzeichnet, dass** dem auf das sensorfunktionale Flächengebilde ausgeübten Druck (z-Richtung) eine Verstellung des zu bedienenden Bauteils des Fahrzeug zugeordnet wird.

34. Verfahren nach Anspruch 33, **dadurch gekennzeichnet, dass** einer stetigen Veränderung des Drucks eine stetige Verstellung des zu bedienenden Bauteils des Fahrzeug zugeordnet wird.

35. Verfahren zur Bedienung von Kraftfahrzeugen, nach einem der Ansprüche 32 bis 34, **dadurch gekennzeichnet, dass** einem Bedienfeld (160) eine Anzeigevorrichtung (30) zugeordnet ist, wobei ein Bedienfeld (160) und eine Anzeigevorrichtung (30) vorgesehen ist

36. Verfahren zur Herstellung eines Innenausstattungsteils (16) nach einem der Ansprüche 1 bis 31, **gekennzeichnet durch** die Schritte:
- Herstellung eines Trägerkörpers (1)
- Aufkaschieren des sensorfunktionalen Flächengebildes (2) auf den Trägerkörper (1)
- Aufkaschieren der Deckschicht (3) auf das sensorfunktionale Flächengebilde (2) und ggf. freiliegende Bereiche des Trägerkörpers (1)

37. Verfahren zur Herstellung eines Innenausstattungsteils (16) nach einem der Ansprüche 1 bis 31, **gekennzeichnet durch** die Schritte:
- Herstellen eines Trägerkörper (1)
- Bildung eines Schichtkörpers aus der Deckschicht (3) und dem sensorfunktionalen Flächengebilde (2)
- Aufkaschieren des Schichtkörpers auf den Trägerkörper (1)

38. Verfahren nach Anspruch 37, **dadurch gekennzeichnet, dass** die Deckschicht gaspermeabel ausgebildet ist und das sensorfunktionale Flächengebilde (2) durch Anlegen eines Unterdrucks auf der innenraumseitigen Oberfläche der Deckschicht (3) gegenüber dieser positioniert wird.

## Claims

1. Interior fitting (16) for a vehicle, in particular for a motor vehicle, comprising a support body (1) which is provided, at least in some regions, with a sensor-functional planar structure (2) and with a covering layer (3) on the side facing the interior, it being possible for different output signals to be generated by means of the planar structure (2) as a function of the location of action thereupon and the covering layer (3) being of flexible design and completely covering the sensor-functional planar structure (2), **characterized in that** the covering layer (3) can be interchanged.

2. Interior fitting (16) according to Claim 1, **characterized in that** the planar structure (2) is of pressure-sensitive design.

3. Interior fitting (16) according to Claim 1 or 2, **characterized in that** the covering layer (3) is designed as a textile planar structure (2), in particular as a woven fabric.

4. Interior fitting (16) according to Claim 1 or 2, **characterized in that** the covering layer (3) consists of a leather or artificial leather or a film.

5. Interior fitting (16) according to one of the preceding claims, **characterized in that** the covering layer (3) is arranged directly on the sensor-functional planar structure (2).

6. Interior fitting (16) according to one of the preceding claims, **characterized in that** at least one compressible intermediate layer (4), in particular of a soft foam plastic, is arranged between the covering layer (3) and the sensor-functional planar structure (2).

7. Interior fitting (16) according to one of the preceding claims, **characterized in that** at least one compressible intermediate layer (4), in particular of a soft foam plastic, is arranged between the support body (1) and the sensor-functional planar structure (2).

8. Interior fitting (16) according to Claim 6 or 7, **characterized in that** force-transmitting moulded pieces (5) of a stiff or semi-stiff material are arranged in the compressible intermediate layer (4).

9. Interior fitting (16) according to one of the preceding claims, **characterized in that** the interior fitting has means on the side facing the interior for the visual orientation of the operator.

10. Interior fitting (16) according to one of the preceding claims, in particular according to Claim 9, **characterized in that** an illuminating device is arranged below the covering layer (3).

11. Interior fitting (16) according to Claim 10, **characterized in that** the illuminating device is of planar design and is preferably arranged between the support body (1) and the covering layer (3), in particular directly below the sensor-functional planar structure (2).

12. Interior fitting (16) according to Claim 11, **characterized in that** the illuminating device comprises an electroluminescent film, an OLED or polyLED.

13. Interior fitting (16) according to one of Claims 9 to 12, **characterized in that** the means for the visual orientation comprise images which can be projected from the vehicle interior onto the covering layer (3).

14. Interior fitting (16) according to one of Claims 9 to 13, **characterized in that** the means for the visual orientation comprise optical waveguides arranged in the covering layer (3) and/or in the sensor-functional planar structure.

15. Interior fitting (16) according to one of the preceding claims, **characterized in that** the interior fitting has means for the tactile orientation of the operator.

16. Interior fitting (16) according to Claim 15, **characterized in that** the means comprise a structured moulded part (12) of a stiff or semi-stiff material.

17. Interior fitting (16) according to Claim 16, **characterized in that** the structured moulded part (12) has recesses (13).

18. Interior fitting (16) according to one of Claims 15 to 17, **characterized in that** the means for the tactile orientation have changeable structures in the interior fitting.

19. Interior fitting (16) according to one of Claims 15 to 18, **characterized in that** the means for the tactile orientation comprise locations of different surface temperatures.

20. Interior fitting (16) for a vehicle, according to one of the preceding claims, **characterized in that** the interior fitting (16) has an operating panel (160), the operating panel (160) having a central region (161) and a plurality of peripheral regions (162, 163).

21. Interior fitting (16) according to Claim 20, **characterized in that** the central region (161) of the operating panel (160) is round.

22. Interior fitting (16) according to Claim 20 or 21, **characterized in that** the peripheral regions (162, 163) of the operating panel (160) are arranged in the manner of sectors around the central region (161).

23. Interior fitting (16) according to Claim 20, 21 or 22, **characterized in that** the peripheral regions (162, 163) of the operating panel (160) completely surround the central region (161) of the operating panel (160).

24. Interior fitting (16) according to one of Claims 20 to 23, **characterized in that** the interior fitting (16) is assigned a display device (30), with it being possible for information items to be displayed on the display device (30) as a function of an operating mode.

25. Interior fitting (16) according to Claim 24, **characterized in that** different vehicle components can be operated by means of the operating panel (160) as a function of the operating mode.

26. Interior fitting (16) according to one of Claims 20 to 25, **characterized in that** the operating mode can be changed as a function of the actuation of the central region (161) and/or of the peripheral regions (162, 163) of the operating panel (160), preferably as a function of the actuation of the peripheral regions (162, 163) of the operating panel (160).

27. Interior fitting (16) according to one of Claims 20 to 26, **characterized in that** a different operating mode is assigned the operation of a different vehicle component, in particular the air-conditioning control, the ventilation, a car radio, a navigation device, a car telephone, an audio configuration system, a fuel information system and/or a mobility information system.

28. Interior fitting (16) according to one of Claims 20 to 27, **characterized in that,** when an operating mode is set, the operation of the vehicle component assigned to the set operating mode takes place as a function of the actuation of the central region (161) and/or of the peripheral regions (162, 163) of the operating panel (160), preferably as a function of the actuation of the central region (161) of the operating panel (160).

29. Interior fitting (16) according to one of Claims 20 to 28, **characterized in that** the actuation of the central region (161) enables a list selection, which can be displayed on the display device (30), of functions which can be carried out and/or of information items which can be displayed to be carried out.

30. Interior fitting (16) according to one of Claims 20 to 29, **characterized in that** the actuation of the central region (161) enables a map excerpt, which can be displayed on the display device (30), to be displaced by a directional actuation and to be changed in size (zoomed close) by a rotary actuation, the map excerpt being in particular the single map excerpt displayed on the display device (30).

31. Interior fitting (16) according to one of Claims 20 to 30, **characterized in that** the actuation of the central region (161) enables a configuration, which can be displayed on the display device (30), of the audio configuration system to be changed.

32. A method for operating motor vehicles, with the use of an interior fitting (16) according to one of the preceding claims, **characterized in that** a continuous adjustment of that component of the vehicle which is to be operated is associated with the direction (x direction, y direction) and/or speed (dx/dt, dy/dt) of a continuous displacement of the location of action on the sensor-functional planar structure (2).

33. Method according to Claim 32, **characterized in that** an adjustment of that component of the vehicle which is to be operated is associated with the pressure (z direction) which is exerted on the sensor-functional planar structure.

34. Method according to Claim 33, **characterized in that** a continuous adjustment of that component of the vehicle which is to be operated is associated with a continuous change of the pressure.

35. Method for operating motor vehicles, according to one of Claims 32 to 34, **characterized in that** an operating panel (160) is assigned a display device (30), an operating panel (160) and a display device (30) being provided.

36. Method for the production of an interior fitting (16) according to one of Claims 1 to 31, **characterized by** the following steps:
- producing a support body (1)
- laminating the sensor-functional planar structure (2) onto the support body (1)
- laminating the covering layer (3) onto the sensor-functional planar structure (2) and optionally exposed regions of the support body (1).

37. Method for the production of an interior fitting (16) according to one of Claims 1 to 31, **characterized by** the following steps:
- producing a support body (1)
- forming a sandwich from the covering layer (3) and the sensor-functional planar structure (2)
- laminating the sandwich onto the support body (1).

38. Method according to Claim 37, **characterized in that** the covering layer is of gas-permeable design and the sensor-functional planar structure (2) is positioned in relation thereto by application of a negative pressure on that surface of the covering layer (3) which is on the side facing the interior.

## Revendications

1. Élément d'équipement intérieur (16) pour véhicule, notamment pour véhicule motorisé, comprenant un corps porteur (1) pourvu au moins en partie d'une structure superficielle assumant la fonction de capteur (2) et d'une couche de revêtement (3) côté habitacle, différents signaux de sortie pouvant être émis à l'aide de la structure superficielle (2) en fonction du lieu d'activation et la couche de revêtement (3) étant réalisée de façon flexible et la structure superficielle assumant la fonction de capteur (2) étant entièrement recouverte, **caractérisé en ce que** la couche de revêtement (3) peut être remplacée.

2. Élément d'équipement intérieur (16) selon la revendication 1, **caractérisé en ce que** la structure superficielle (2) est réalisée de façon sensible à la pression.

3. Élément d'équipement intérieur (16) selon la revendication 1 ou 2, **caractérisé en ce que** la couche de revêtement (3) prend la forme d'une structure superficielle (2) textile, notamment d'un tissu.

4. Élément d'équipement intérieur (16) selon la revendication 1 ou 2, **caractérisé en ce que** la couche de revêtement (3) se compose d'un cuir, d'un similicuir ou d'un film.

5. Élément d'équipement intérieur (16) selon l'une quelconque des revendications précédentes, **caractérisé en ce que** la couche de revêtement (3) est disposée directement sur la structure superficielle assumant la fonction de capteur (2).

6. Élément d'équipement intérieur (16) selon l'une quelconque des revendications précédentes, **caractérisé en ce qu'**au moins une couche intermédiaire compressible (4), notamment en mousse synthétique souple, est disposée entre la couche de revêtement (3) et la structure superficielle assumant la fonction de capteur (2).

7. Élément d'équipement intérieur (16) selon l'une quelconque des revendications précédentes, **caractérisé en ce qu'**au moins une couche intermédiaire compressible (4), notamment en mousse synthétique souple, est disposée entre le corps porteur (1) et la structure superficielle assumant la fonction de capteur (2).

8. Élément d'équipement intérieur (16) selon la revendication 6 ou 7, **caractérisé en ce que** des pièces moulées (5) à transmission de force en matière rigide ou semi-rigide sont disposées dans la couche intermédiaire compressible (4).

9. Élément d'équipement intérieur (16) selon l'une quelconque des revendications précédentes, **caractérisé en ce que** l'élément d'équipement intérieur présente côté habitacle des moyens d'orientation optique de l'utilisateur.

10. Élément d'équipement intérieur (16) selon l'une quelconque des revendications précédentes, notamment selon la revendication 9, **caractérisé en ce qu'**un dispositif d'éclairage est disposé en dessous de la couche de revêtement (3).

11. Élément d'équipement intérieur (16) selon la revendication 10, **caractérisé en ce que** le dispositif d'éclairage est réalisé de façon plane et est disposé de préférence entre le corps porteur (1) et la couche de revêtement (3), notamment directement en dessous de la structure superficielle assumant la fonction de capteur (2).

12. Élément d'équipement intérieur (16) selon la revendication 11, **caractérisé en ce que** le dispositif d'éclairage comprend un film électroluminescent, une OLED ou une polyLED.

13. Élément d'équipement intérieur (16) selon l'une quelconque des revendications 9 à 12, **caractérisé en ce que** les moyens d'orientation optique comprennent des images projetables sur la couche de revêtement (3) depuis l'habitacle du véhicule.

14. Élément d'équipement intérieur (16) selon l'une quelconque des revendications 9 à 13, **caractérisé en ce que** les moyens d'orientation optique comprennent un guide lumineux disposé dans la couche de revêtement (3) et/ou dans la structure superficielle assumant la fonction de capteur.

15. Élément d'équipement intérieur (16) selon l'une quelconque des revendications précédentes, **caractérisé en ce que** l'élément d'équipement intérieur présente des moyens d'orientation tactile de l'utilisateur.

16. Élément d'équipement intérieur (16) selon la revendication 15, **caractérisé en ce que** les moyens comprennent une pièce moulée structurée (12) fabriquée à partir d'un matériau rigide ou semi-rigide.

17. Élément d'équipement intérieur (16) selon la revendication 16, **caractérisé en ce que** la pièce moulée structurée (12) comporte des évidements (13).

18. Élément d'équipement intérieur (16) selon l'une quelconque des revendications 15 à 17, **caractérisé en ce que** les moyens d'orientation tactile comprennent des structures modifiables dans l'élément d'équipement intérieur.

19. Élément d'équipement intérieur (16) selon l'une quelconque des revendications 15 à 18, **caractérisé en ce que** les moyens d'orientation tactile comprennent des emplacements présentant différentes températures de surface.

20. Élément d'équipement intérieur (16) pour véhicule, selon l'une quelconque des revendications précédentes, **caractérisé en ce que** l'élément d'équipement intérieur (16) présente un organe de commande (160), l'organe de commande (160) comportant une zone centrale (161) et une pluralité de zones périphériques (162, 163).

21. Élément d'équipement intérieur (16) selon la revendication 20, **caractérisé en ce que** la zone centrale (161) de l'organe de commande (160) est ronde.

22. Élément d'équipement intérieur (16) selon la revendication 20 ou 21, **caractérisé en ce que** les zones périphériques (162, 163) de l'organe de commande (160) sont disposées autour de la zone centrale (161) de façon répartie en secteurs.

23. Élément d'équipement intérieur (16) selon la revendication 20, 21 ou 22, **caractérisé en ce que** les zones périphériques (162, 163) de l'organe de commande (160) cernent entièrement la zone centrale (161) de l'organe de commande (160).

24. Élément d'équipement intérieur (16) selon l'une quelconque des revendications 20 à 23, **caractérisé en ce qu'**un dispositif d'affichage (30) est associé à l'élément d'équipement intérieur (16), des informations pouvant s'afficher sur le dispositif d'affichage (30) en fonction d'un mode de fonctionnement.

25. Élément d'équipement intérieur (16) selon la revendication 24, **caractérisé en ce qu'**en fonction du mode de fonctionnement, différents composants du véhicule peuvent être commandés à l'aide de l'organe de commande (160).

26. Élément d'équipement intérieur (16) selon l'une quelconque des revendications 20 à 25, **caractérisé en ce que** le mode de fonctionnement peut varier en fonction de l'actionnement de la zone centrale (161) et/ou des zones périphériques (162, 163) de l'organe de commande (160), de préférence en fonction de l'actionnement des zones périphériques (162, 163) de l'organe de commande (160).

27. Élément d'équipement intérieur (16) selon l'une quelconque des revendications 20 à 26, **caractérisé en ce que** la commande d'un composant différent du véhicule est associée à un mode de fonctionnement différent, notamment la régulation de la climatisation, l'aération, un autoradio, un appareil de navigation, un téléphone de voiture, un système de configuration audio, un système d'information de niveau de carburant et/ou un système d'information sur la mobilité.

28. Élément d'équipement intérieur (16) selon l'une quelconque des revendications 20 à 27, **caractérisé en ce que** pour un mode de fonctionnement réglé, la commande des composants de véhicule associés au mode de fonctionnement réglé est réalisée en fonction de l'actionnement de la zone centrale (161) et/ou des zones périphériques (162, 163) de l'organe de commande (160), de préférence en fonction de l'actionnement de la zone centrale (161) de l'organe de commande (160).

29. Élément d'équipement intérieur (16) selon l'une quelconque des revendications 20 à 28, **caractérisé en ce qu'**un choix de liste pouvant apparaître sur le dispositif d'affichage (30) comprenant des fonctions exécutables et/ou des informations affichables peut être exécuté par actionnement de la zone centrale (161).

30. Élément d'équipement intérieur (16) selon l'une quelconque des revendications 20 à 29, **caractérisé en ce que** l'actionnement de la zone centrale (161) permet de déplacer une section de carte apparaissant sur le dispositif d'affichage (30) par actionnement des flèches de direction et qu'un actionnement par rotation permet d'en modifier la taille (zoom), la section de carte étant notamment la seule section de carte affichée sur le dispositif d'affichage (30).

31. Élément d'équipement intérieur (16) selon l'une quelconque des revendications 20 à 30, **caractérisé en ce que** l'actionnement de la zone centrale (161) permet de modifier la configuration du système de configuration audio affichable sur le dispositif d'affichage (30).

32. Procédé de commande de véhicule motorisé, utilisant un élément d'équipement intérieur (16) selon l'une quelconque des revendications précédentes, **caractérisé en ce qu'**un ajustage continu de l'élément du véhicule à commander est associé à la direction (direction x, direction y) et/ou à la vitesse (dx/dt, dy/dt) de déplacement continu du lieu d'activation sur la structure superficielle assumant la fonction de capteur (2).

33. Procédé selon la revendication 32, **caractérisé en ce qu'**un ajustage de l'élément du véhicule à commander est associé à la pression exercée sur la structure superficielle assumant la fonction de capteur (direction z).

34. Procédé selon la revendication 33, **caractérisé en ce qu'**un ajustage continu de l'élément du véhicule à commander est associé à une variation continue de la pression.

35. Procédé de commande de véhicule motorisé selon l'une quelconque des revendications 32 à 34, **caractérisé en ce qu'**un dispositif d'affichage (30) est associé à un organe de commande (160), un organe de commande (160) et un dispositif d'affichage (30) étant prévus.

36. Procédé de fabrication d'un élément d'équipement intérieur (16) selon l'une quelconque des revendications 1 à 31, **caractérisé par** les étapes suivantes :
- fabrication d'un corps porteur (1) ;
- contrecollage de la structure superficielle assumant la fonction de capteur (2) sur le corps porteur (1) ;
- contrecollage de la couche de revêtement (3) sur la structure superficielle assumant la fonction de capteur (2) et le cas échéant sur les zones dégagées du corps porteur (1).

37. Procédé de fabrication d'un élément d'équipement intérieur (16) selon l'une quelconque des revendications 1 à 31, **caractérisé par** les étapes suivantes :
- fabrication d'un corps porteur (1) ;
- formation d'un corps en couches à partir de la couche de revêtement (3) et de la structure superficielle assumant la fonction de capteur (2) ;
- contrecollage du corps en couches sur le corps porteur (1).

38. Procédé selon la revendication 37, **caractérisé en ce que** la couche de revêtement est formée de façon perméable aux gaz et que la structure superficielle assumant la fonction de capteur (2) est positionnée par rapport à elle par application d'une sous-pression sur la surface côté habitacle de la couche de revêtement (3).
